(19) Europäisches Patentamt
European Patent Office
Office européen des brevets

(11) Publication number: **0 374 804 B1**

(12) # EUROPEAN PATENT SPECIFICATION

(45) Date of publication of patent specification: **22.09.93**

(51) Int. Cl.5: **C04B 41/48**

(21) Application number: **89123404.9**

(22) Date of filing: **18.12.89**

(54) **Process for protecting stony materials, marble, tiles and cement from atmospheric agents and pollutants.**

(30) Priority: **19.12.88 IT 2300488**

(43) Date of publication of application:
**27.06.90 Bulletin 90/26**

(45) Publication of the grant of the patent:
**22.09.93 Bulletin 93/38**

(84) Designated Contracting States:
**AT BE CH DE ES FR GB IT LI NL**

(56) References cited:
**EP-A- 0 301 487**
**WO-A-80/00929**

(73) Proprietor: **AUSIMONT S.p.A.**
**Foro Buonaparte, 31**
**I-20121 Milano(IT)**

(72) Inventor: **Moggi, Giovanni**
**14, Via Galilei**
**I-20124 Milan(IT)**
Inventor: **Lenti, Daria**
**45, Via Mazzini**
**I-15048 Valenza Alessandria(IT)**
Inventor: **Ingoglia, Desiderata**
**8, Via Formentini**
**I-20121 Milan(IT)**

(74) Representative: **Weinhold, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**D-80803 München (DE)**

EP 0 374 804 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a process for protecting stony materials, marble, tiles and cement as well as articles manufactured from said materials from the destructive action of atmospheric agents and pollutants.

As it is known, the decay of building materials such as marble, stones, tiles, cement and articles manufactured from said materials is caused by chemical and physical phenomena, both of which occur in the presence of water.

The physical phenomenon acting on all building materials is due to the succession of freezing and thawing of the water absorbed inside the pores of the material, which involves variations of the specific volume and tensions capable of causing fractures or in any case disaggregation among the individual particles which form the material.

Another physico-chemical phenomenon is the dissolution in water of the limestone which is present in marbles as an essential component and in stones as binder, with consequent loss of cohesion between the granules.

Still more important for the decay of the materials and of the articles exposed to the open air is a combination of chemical phenomena. Said combination essentially consists in the attack of the carbonated parts of the material or article by the agents and pollutants which are present in the air (e.g. carbon dioxide, sulphur dioxide, nitrogen oxides, hydrochloric acid, hydrosulphurous acid). Said pollutants react with the material in the presence of water and their concentration in the rain is particularly high at the beginning of the precipitation.

It is also known that in order to eliminate or to at least significantly reduce the above drawbacks it is necessary to substantially reduce the penetration rate of the water from the outside into the material to be protected.

To achieve this goal, water-repellent chemicals are usually applied onto the outer surface of the material to be protected.

US-A-4,499,146 describes the use, for that purpose, of neutral perfluoropolyethers (PFPE), i.e. PFPE free of functional groups. EP-A-192,493 and 215,492 describe the use of perfluoropolyethers one or both end groups of which comprise functional groups, such as amine or ester groups. The same EP-A also describe the use of functionalized perfluoropolyethers in admixture with perfluoropolyethers having no functional groups, always in chlorofluorocarbon solution.

The invention disclosed in EP-A-337 311 has led to a considerable improvement in the application performance and the applicative technologies, due to the use of PFPE-based aqueous emulsions or microemulsions which eliminate the necessity of using chlorofluorocarbon solvents.

Furthermore WO-A-80/00929 discloses aqueous dispersions of polytetraflüoroethylene and a copolymer of tetrafluoroethylene and perfluoro (propylvinylether) which compositions are used for making non-stick coatings on cookware.

The use of these emulsions or microemulsions based on functionalized or unfunctionalized perfluoropolyethers provides good results in the protection of marble and of synthetic or natural stones having low or medium porosity. Less satisfactory results are, however, obtained with high porosity materials, i.e. materials having a porosity of 20-40% or more.

It is an object of the present invention to provide a process which provides excellent protection both for low or medium porosity materials as well as for high porosity materials.

It is another object of the invention to provide a process which, with the amounts of protective agents, i.e. functionalized or unfunctionalized perfluoropolyethers, being the same and being present in aqueous-(micro)emulsions, results in a better protection.

These and still other objects are achieved by the process of the present invention for protecting stony materials, marble, tiles, cement and articles manufactured from said materials from atmospheric agents and pollutants by applying a certain protective agent onto the surface of said materials and articles. Said process is characterized in that the protective agent comprises a mixture of:

1) polytetrafluoroethylene and/or a tetrafluoroethylene copolymer containing up to 12% by moles of other perfluorinated monomers, said homopolymer or copolymer being present in the form of an aqueous dispersion; and

2) an aqueous emulsion or microemulsion of a (per)fluoropolyether comprising sequences of one or more statistically distributed fluorooxyalkylene units of the following formulae:

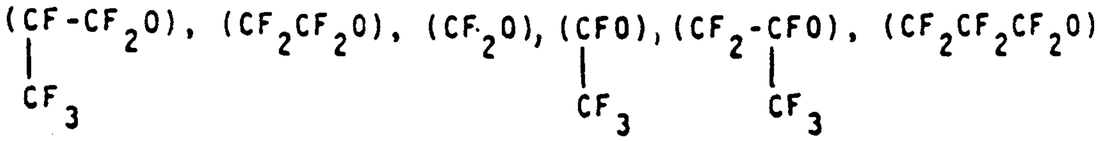 and

$(CF_2CF_2CH_2O)$;

and having (preferably $C_{1-3}$) perfluoroalkyl and/or functional end groups.

"(Per)fluoropolyether functional group" means a group which is capable of forming a chemical and/or physical bond with the material to be protected and is selected, e.g., from the ones which are capable of forming coordinative or charge transfer bonds with said material. Preferred functional groups are: -COOH, $-CH_2OH$, polyoxyalkylene-OH, $-C(OH)_2-CF_3$, $-CONR^2R^3$ ,$-CONHR^9$, $-CONH_2$, $-COOR^4$ and quaternary ammonium groups, wherein $R^2$ and $R^3$, the same or different from each other, are alkyl groups usually containing 1 to 8, preferably 1 to 4, carbon atoms; $R^4$ represents an alkyl group usually containing 1 to 8, preferably 1 to 4, carbon atoms or a (preferably $C_{6-12}$-)aromatic or (preferably $C_{7-13}$-)alkyl-aromatic group, such as phenyl,benzyl and phenethyl; and $R^9$ represents and alkyl group usually containing 1 to 8, and preferably 1 to 4, carbon atoms. The end group -COOH preferably is salified.

The quaternary ammonium group preferably is a $-COONR^5R^6R^7R^8$ group, wherein $R^5$, $R^6$, $R^7$ and $R^8$ represent alkyl groups usually containing a total of 4 to 32 carbon atoms (i.e. $R^5$ to $R^8$ together).

Examples of the above alkyl groups are methyl, ethyl, n-and i-propyl, butyl, hexyl, 2-ethylhexyl and octyl.

It is also possible to utilize as starting products (per)fluoropolyethers with $-COCF_3$, -COF or $-SO_2F$ end groups which during the preparation of the (micro)emulsion hydrolyse to $-C(OH)_2-CF_3$, -COOH and $-SO_3H$ groups and are then salified. The average molecular weight of the (per)fluoropolyether chain ranges from about 1,000 to about 10,000, preferably from about 2,000 to about 6,000.

The (per)fluoropolyethers utilized in the present invention may contain, besides the above functional groups, perfluoroalkyl end groups, e.g., $CF_3$, $C_2F_5$, and/or $C_3F_7$.

Preferred (per)fluoropolyethers to be utilized in the present invention are those which belong to the following classes:

(1) 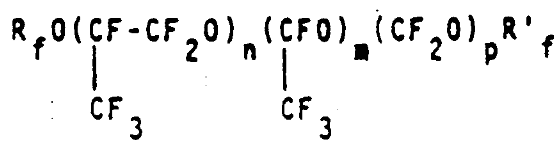

having a random distribution of the perfluorooxyalkylene units;

(2) $R_fO(CF_2CF_2O)_n(CF_2O)_mR'_f$

having a random distribution of the perfluorooxyalkylene units;

(3) 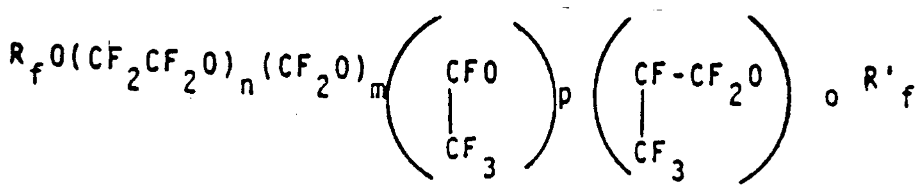

having a random distribution of the perfluorooxyalkylene units;

(4) 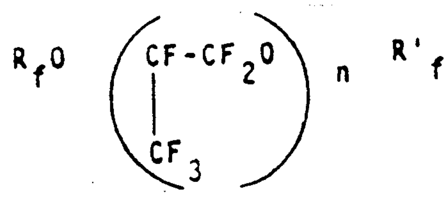 ,

(5) $R_fO(CF_2CF_2O)_nR'_f$

(6) $R_fO(CF_2CF_2CF_2O)_nR'_f$ or $R_fO(CH_2CF_2CF_2O)_nR'_f$;

wherein m, n, o and p have values such that the average molecular weight of the corresponding chains is in the range given above.

$R_f$ and $R'_f$ in formulae (1) to (6) are perfluoroalkyl groups, preferably having 1 to 3 carbon atoms and/or end groups containing functional groups of the type defined hereinbefore.

As it is known, the functional end groups of functionalized perfluoropolyethers are bound to the perfluoropolyether chain by a divalent linking group, particularly by a

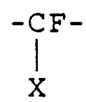

group, wherein X = F or $CF_3$.

Other divalent linking groups or radicals are described in e.g. US-A-4,094,911.

Perfluoropolyethers of class (1) are commercially available under the trademark Fomblin ® Y, the ones of class (2) under the trademark Fomblin ® Z, both of which being produced by Montedison. Products of class (4) are commercially known as Krytox ® (Du Pont).

The products of class (5) are described in US-A-4,523,039; the ones of class (6) are described in EP-A-148,482.

The products of class (3) may be prepared according to US-A-3,665,041. Useful products also are the perfluoropolyethers described in US-A-4,523,039 or in J.Am.Chem.Soc.1985, 107, 1195-1201.

The products of classes (1), (2) and (3) which have been obtained by photochemical oxidation processes may be employed as crude products of the photooxidation process, which products contain peroxy groups -00- in the chain, inserted between the (per)fluorooxyalkylene units.

Perfluoropolyethers also suitable for use in the present invention are the ones described in EP-A-244839, which polyethers comprise functional groups of the type described hereinbefore or perfluoroalkyl end groups.

In the preparation of the aqueous mixture to be employed according to the present invention it is particularly advantageous to use the (per)fluoropolyether in the form of an aqueous microemulsion.

The microemulsions for use in the present invention are obtainable according to, e.g., the method described in EP-A-250766. Essential ingredient of said microemulsions is an ionic or non-ionic fluorinated surfactant and/or surfactant selected from hydrogenated (non-fluorinated) alcohols containing 1 to 12, preferably 1 to 6, carbon atoms and fluoroalkanols.

In particular, the following ones may be mentioned as fluorinated surfactants of the ionic or non-ionic type:

(a) perfluorocarboxylic acids containing from 5 to 11 carbon atoms and salts thereof;
(b) perfluorosulphonic acids having from 5 to 11 carbon atoms and salts thereof;
(c) the non-ionic surfactants described in EP-A-51,526, consisting of a perfluoroalkyl chain and a hydrophilic polyoxyalkylene terminus;
(d) mono- and di-carboxylic acids derived from perfluoropolyethers and salts thereof;
(e) non-ionic surfactants consisting of a perfluoropolyether chain linked to a polyoxyalkylene chain;
(f) perfluorinated cationic surfactants or surfactants derived from perfluoropolyethers having 1, 2 or 3 hydrophobic chains.

$C_2F_4$ copolymers suitable for use in the present invention are, for example, the ones containing up to 10% by moles of hexafluoropropene or up to 5% by moles of (preferably $C_{1-3}$-) perfluoroalkyl-perfluorovinyl ethers, in particular perfluoropropyl-perfluorovinyl ether (preferably used in amounts up to 3% by moles).

The average molecular weight of the $C_2F_4$ homopolymer or copolymer generally ranges from about 100,000 to about 2,000,000.

The average size of the primary particles of homopolymer or copolymer obtained by emulsion polymerization generally ranges from 0.05 to 0.5 $\mu$m.

Besides polytetrafluoroethylene (PTFE) directly prepared in an aqueous dispersion by emulsion polymerization, it is possible to use PTFE powder obtained from suspension polymerization and having a particles size of up to 16 $\mu$m, the particles being obtained by treating the dispersion powder in a set-mill and redispersion in water by means of a non-ionic surfactant such as Triton ® X 100 and with the addition of ammonium perfluorooctanoate.

The amount of polytetrafluoroethylene or its copolymer in aqueous dispersion in the mixture of protective agents according to the present invention, calculated on dry PTFE, generally ranges from about 2 to about 60% by weight and usually from about 2 to about 30% by weight, based on the total weight of the perfluoropolyethers (PFPE) employed.

Preferably the mixture contains about 5 to 20% (calculated as dry PTFE) with respect to the total PFPE.

The aqueous mixture of $C_2F_4$ (co)polymer and (per)fluoropolyether according to the invention allows to obtain a good protection when using perfluoropolyether amounts which are significantly lower than the ones used in the prior methods which utilized perfluoropolyethers only.

The amount of (per)fluoropolyether to be used in the treatment varies, inter alia, as a function of the porosity of the material to be treated: generally it ranges from 10 to 100 g/m$^2$.

The following examples are given in order to illustrate the present invention, without being a limitation of possible embodiments thereof.

In the tests described in the following, the treatment effectiveness was evaluated on the basis of the amount of water absorbed by the various specimens within 60 minutes and is expressed by the ratio:

$$\frac{\text{(water absorbed by the untreated material) minus (water absorbed by the treated material)}}{\text{(water absorbed by the untreated material)}} \cdot 100\ \%.$$

The tests were carried out by attaching to the specimen surface an apparatus consisting of a glass cylinder filled with water and connected with a graduated micropipette, which allows to measure the amount of water absorbed by the contact surface of the specimen. The apparatus is described in the document published by the Unesco-Rilem group PEM under number 78,182. The absorbed water reading and the determined value are expressed in g/cm$^2$ of surface.

The amount of water absorbed by the various specimens (expressed in g/cm$^2$) and the corresponding treatment effectiveness are reported in the following Tables.

As one can see from the reported results, the use of compositions according to the present invention provides better protection than the use of only the perfluoropolyether microemulsion.

The polytetrafluoroethylene employed was Algoflon ® in dispersion, produced by Montefluos S.p.A. The size of the polytetrafluoroethylene primary particles ranged from 0.15 to 0.25 $\mu$m.

The amounts of protective composition applied by brushing onto the specimens and reported in Tables 1 to 4 are expressed in grams per square meter of surface.

Example 1 (Table 1)

Five sandstone (Pietra Serena) specimens having a porosity of 8.5% were used. The specimens had the following dimensions: 100 x 50 x 50 mm.

Specimens 1 and 3 were not treated. By means of a brush, different protective compositions were applied onto specimens 2 and 4, after having divided the 100 x 50 mm surface into two equal parts (2, 2A and 4, 4A).

Microemulsion B′ (see Table 1) was applied by means of a brush on part 2.

Microemulsion B′ to which polytetrafluoroethylene latex had been added was applied on part 2A.

The same procedure was followed in the case of parts 4 and 4A. The fifth specimen was treated with PTFE latex.

Test 5 proves that PTFE alone does not exert any protective action in practice, even when applied in higher amounts than the ones used for tests 2A and 4A.

TABLE 1

| Test No. | Treated material | Protective agents | Amount of applied protective agents $g/m^2$ | Amount of absorbed water $g/cm^2$ | Treatment effectiveness % |
|---|---|---|---|---|---|
| 1 | Serena Stone | None | - | 0.0100 | - |
| 2 | " | Microem.B' | 30 | 0.0021 | 79 |
| 2A | " | Mix 1 | 31 | 0.0012 | 88 |
| 3 | " | None | - | 0.0140 | - |
| 4 | " | Microem.B' | 40 | 0.0020 | 86 |
| 4A | " | Mix 1 | 42 | 0.0010 | 93 |
| 5 | " | PTFE dispersion | 9 | 0.0126 | 10 |

- Microemulsion B' = prepared according to EP-A-337 311 and containing:

| | |
|---|---|
| perfluoropolyether | 11.3 g |
| isopropanol | 16.0 g |
| aqueous phase | 72.7 g |

- Mix 1 = a mixture of microemulsion B' and PTFE latex (420 g/l) such that the amount of PTFE (as dry product) was 9% with respect to the PFPE.

- PTFE dispersion at 25% of dry product having primary particles of 0.2-0.3 µm.

- Serena Stone = sandstone (having a porosity of 8.5%) with a clay matrix.

Example 2 (Table 2)

Five specimens of Vicenza Stone (100x50x50 mm) (biocalcarenite having a porosity of about 30%) were used and the procedure of example 1 was followed.

The results are reported in Table 2.

It is apparent that the use of the compositions according to the present invention provides better results than the use of only the microemulsion.

Example 3

Brick specimens having a porosity of 40% and measuring 50x50x50 mm were utilized.

The average absorption value of the untreated specimens (1) was equal to 2.5 g/cm$^2$. This value was used to determine the effectiveness of the treatment in tests 2-5.

It can be seen that the specimens treated with the mixtures containing perfluoropolyether microemulsion plus polytetrafluoroethylene dispersion (tests 3 and 5) give better results than the ones of the reference tests 2 and 4 which had not been treated with the PTFE dispersion.

Example 4

Specimens of two types of cement (50x50x50 mm) having a porosity of 18% (A) and 25% (B), respectively, were utilized.

Specimens 1 and 6 were not treated. As can be seen, the use of the mixture containing PTFE latex (tests 3, 5 and 8) provided better protection than the use of aqueous perfluoropolyether microemulsions alone (reference tests 2 and 7).

TABLE 2

(Example 2)

| Test No. | Treated material | Protective agents | Amount of applied protective agents $g/m^2$ | Amount of absorbed water $grams/cm^2$ | Treatment effectiveness % |
|---|---|---|---|---|---|
| 1 | Vicenza Stone | - | - | 1.240 | - |
| 2 | " | Microem. $S_2TT$ | 90 | 0.434 | 65 |
| 2A | " | MIX 2 | 92 | 0.260 | 79 |
| 3 | " | - | - | 1.20 | - |
| 4 | " | Microem. SIPO | 90 | 0.75 | 38 |
| 4A | " | MIX 3 | 92 | 0.42 | 65 |
| 5 | " | PTFE dispersion | 15 | 1.100 | 8 |

- Microemulsion $S_2TT$: prepared as described in example 5 of EP-A-337 311 and containing:

| | |
|---|---|
| perfluoropolyether | 19.80 % by weight |
| fluorinated surfactant | 14.55 % by weight |
| aqueous phase | 65.65 % by weight |

- Microemulsion S1PO: prepared as described in example 1 of EP-A-337 311 and containing:

| | |
|---|---|
| peroxide group containing perfluoropolyether | 21.5% by weight |
| fluorinated surfactant | 2.0% by weight |
| tert.-butanol | 9.8% by weight |
| aqueous phase | 66.7% by weight |

- Mix 2 = a mixture of microemulsion $S_2TT$ and PTFE latex (420 g/l) such that the amount of PTFE as dry product was 16% by weight with respect to the PFPE.

- Mix 3 = like Mix 2, but with S1PO and PTFE (20% by weight with respect to the PFPE)

- Test 5: only PTFE latex (420 g/l) was applied, the amount of PTFE as dry product corresponding to 15 g/m².

TABLE 3

| (Example 3) | | | | | |
|---|---|---|---|---|---|
| Test No. | Treated material | Protective agents | Amount of applied protective agents g/m² | Amount of absorbed water g/cm² | Treatment effectiveness % |
| 1 | Brick | - | - | from 2.40 to 2.60 depending on the specimen | - |
| 2 | Brick | $S_2$TT microemulsion | 30 | 1.37 | 45 |
| 3 | Brick | MIX 2 | 31 | 1.00 | 60 |
| 4 | Brick | $S_2$TT microemulsion | 60 | 0.97 | 61 |
| 5 | Brick | MIX 2 | 62 | 0.37 | 85 |
| - Brick 40% porosity<br>- $S_2$TT microemulsion (see Table 2)<br>- Mix 2 (see Table 2) | | | | | |

Table 4

| (Example 4) | | | | | |
|---|---|---|---|---|---|
| Test No. | Treated material | Protective agents | Amount of applied protective agents g/$m^2$ | Amount of absorbed water g/$cm^2$ | Treatment effectiveness % |
| 1 | Cement (A) | none | - | 0.32-0.38 depending on the specimen | - |
| 2<br>3 | Cement (A)<br>Cement (A) | $S_2$TT microemulsion<br>Mix 2 | 45<br>46 | 0.140<br>0.078 | 60<br>78 |
| 4<br>5 | Cement (A)<br>Cement (A) | Microem.A′<br>MIX A | 65<br>65 | 0.219<br>0.091 | 39<br>74 |
| 6 | Cement (B) | - | - | from 0.36 to 0.44 | - |
| 7<br>8 | Cement (B)<br>Cement (B) | Microm.A′<br>MIX A | 65<br>66 | 0.214<br>0.020 | 40<br>94 |
| - Microemulsion A′ = B′ (Table 1)<br>- Mix A = microemulsion A′ containing PTFE latex in an amount equal to 11% (as dry PTFE) with respect to PFPE. | | | | | |

## Claims

1. A process for protecting marble, stones, tiles, cement, gypsums, wood and other related materials utilized in particular in the building industry from the destructive action of atmospheric agents and pollutants, by applying onto said materials a protective agent comprising a mixture of:
   a) an aqueous dispersion of a tetrafluoroethylene homopolymer and/or a tetrafluoroethylene copolymer containing up to 12% by moles of other perfluorinated monomers; and
   b) an aqueous emulsion or microemulsion of a (per)fluoropolyether comprising sequences of one or more of the following fluorooxyalkylene units:

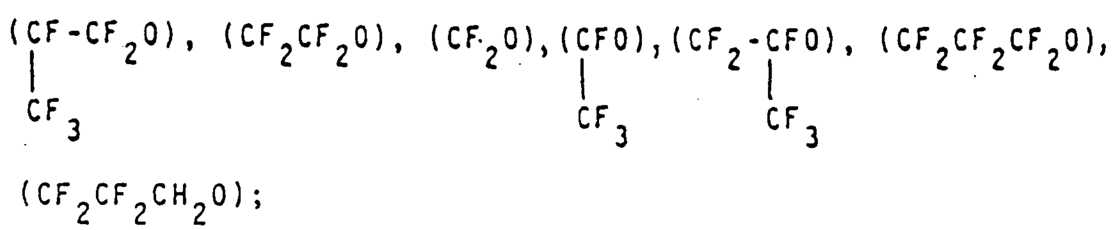

   having an average molecular weight of from about 1,000 to about 10,000 and having perfluoroalkyl end groups and/or end groups containing functional groups capable of forming physical and/or chemical bonds, particularly of the coordinative or charge-transfer type, with the material to be protected.

2. The process of claim 1, wherein the (per)fluoropolyether has functional groups selected from -COOH, $-CH_2OH$, polyoxyalkylene-OH, quaternary ammonium groups, $-C(OH)_2-CF_3$, $-CONR^2R^3$, $-CONHR^9$, $-CONH_2$ and $-COOR^4$, wherein $R^2$ and $R^3$, the same or different from each other, represent alkyl groups; $R^4$ is an alkyl, aromatic or alkyl-aromatic group and $R^9$ is an alkyl group.

3. The process according to claim 2, wherein the -COOH groups are salified.

4. The process of any one of claims 1 to 3, wherein use is made of one or more (per)fluoropolyethers of the following general formulae:

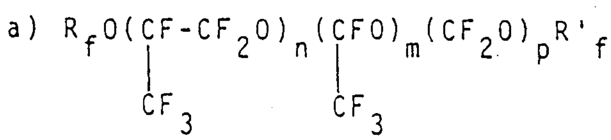

b) $R_fO(CF_2CF_2O)_n(CF_2O)_mR'_f$

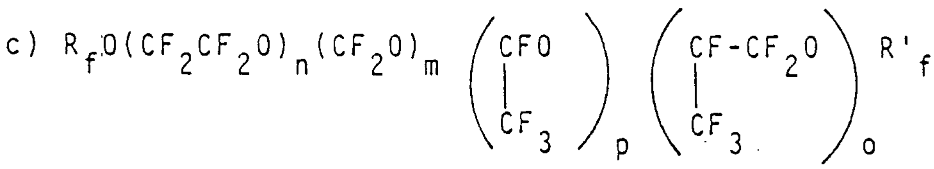

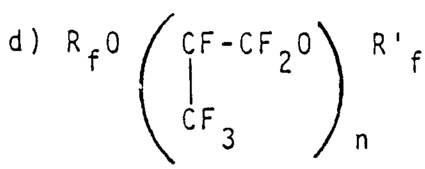

e) $R_fO(CF_2CF_2O)_nR'_f$

f) $R_fO(CF_2CF_2CF_2O)_nR'_f$ or $R_fO(CH_2CF_2CF_2O)_nR'_f$

wherein n, m, p and o have values such that the molecular weight is within the range indicated in claim 1 and $R_f$ and $R'_f$ are $C_{1-3}$-perfluoroalkyl and/or end groups containing functional groups of the type defined in claims 1 and 2.

5. The process of any one of claims 1 to 4 wherein the (per)fluoropolyether is employed in the form of an aqueous microemulsion.

6. A composition for protecting marble, stones, tiles, cement, gypsum, wood and related materials, comprising a mixture of

a) an aqueous dispersion of a tetrafluoroethylene homopolymer or a tetrafluoroethylene copolymer containing up to 12% by moles of other perfluorinated monomers; and

b) an aqueous emulsion or microemulsion of a (per)fluoropolyether as defined in any one of claims 1 to 4.

7. The composition of claim 6, wherein the polytetrafluoroethylene polymer is present, calculated as dry PTFE, in amounts of from about 2 to 60% by weight, particularly about 5 to about 20% by weight, with respect to the total weight of the (per)fluoropolyethers.

**Patentansprüche**

1. Verfahren zum Schutz von Marmor, Steinmaterial, Ziegeln, Zement, Gips, Holz und anderen verwandten, insbesondere in der Bauindustrie verwendeten Materialien vor der zerstörenden Einwirkung atmosphärischer Agenzien und Umweltkontaminationen durch Aufbringen eines Schutzmittels auf diese Materialien, das eine Mischung umfaßt aus:

(a) einer wäßrigen Dispersion eines Tetrafluorethylen-Homopolymers und/oder eines Tetrafluorethylen-Copolymers, enthaltend bis zu 12 Mol-% anderer perfluorierter Monomere, und

(b) einer wäßrigen Emulsion oder Mikroemulsion eines (Per)fluorpolyethers, umfassend Sequenzen von einer oder mehreren der folgenden Fluoroxyalkylen-Einheiten:

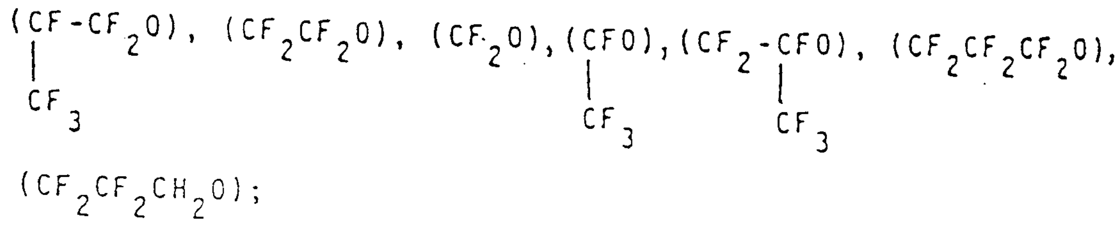

mit einem durchschnittlichen Molekulargewicht von etwa 1000 bis etwa 10 000 und mit Perfluoralkyl-Endgruppen und/oder Endgruppen, die funktionelle Gruppen enthalten, die physikalische und/oder chemische Bindungen, insbesondere vom koordinativen oder Charge-Transfer-Typ, mit dem zu schützenden Material bilden können.

**2.** Verfahren nach Anspruch 1, worin der (Per)fluorpolyether funktionelle Gruppe hat, die aus -COOH, $-CH_2OH$, Polyoxyalkylen-OH, quaternären Ammoniumgruppen, $-C(OH)_2-CF_3$, $-CONR^2R^3$, $-CONHR^9$, $-CONH_2$ und $-COOR^4$ ausgewählt sind, worin $R^2$ und $R^3$, die gleich oder voneinander verschieden sein können, jeweils Alkylgruppen bedeuten, $R^4$ eine Alkylgruppe, eine aromatische oder alkylaromatische Gruppe und $R^9$ eine Alkylgruppe ist.

**3.** Verfahren nach Anspruch 2, worin die -COOH-Gruppe in ein Salz umgewandelt ist.

**4.** Verfahren nach irgendeinem der Ansprüche 1 bis 3, worin ein oder mehrere (Per)fluorpolyether der folgenden allgemeinen Formeln verwendet werden:

a) 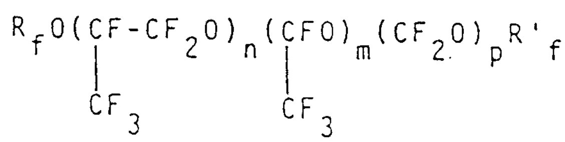

b) $R_fO(CF_2CF_2O)_n(CF_2O)_mR'_f$

c) 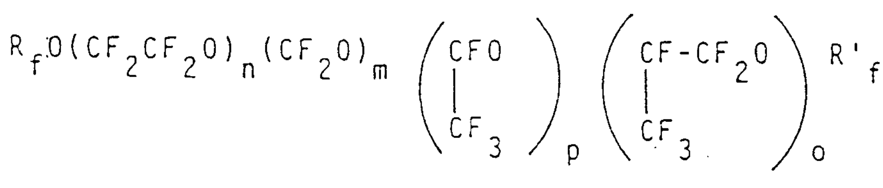

d) 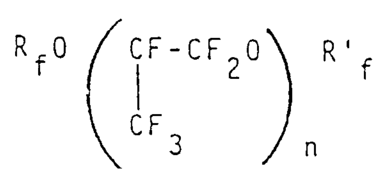

e) $R_fO(CF_2CF_2O)_nR'_f$

f) $R_fO(CF_2CF_2CF_2O)_nR'_f$ or $R_fO(CH_2CF_2CF_2O)_nR'_f$

worin n, m, p und o solche Werte haben, daß das Molekulargewicht innerhalb des in Anspruch 1 angegebenen Bereiches liegt und $R_f$ und $R'_f$ $C_{1-3}$-Perfluoralkylgruppen und/oder Endgruppen sind, die funktionelle Gruppe des in Anspruch 1 und 2 definierten Typs enthalten.

**5.** Verfahren nach irgendeinem der Ansprüche 1 bis 4, worin der (Per)fluorpolyether in Form einer wäßrigen Mikroemulsion verwendet wird.

**6.** Zusammensetzung zum Schutz von Marmor, Steinmaterial, Ziegeln, Zement, Gips, Holz und verwandten Materialien, die eine Mischung umfaßt aus

a) einer wäßrigen Dispersion eines Tetrafluorethylen-Homopolymers oder eines Tetrafluorethylen-Copolymers, enthaltend bis zu 12 Mol-% anderer perfluorierter Monomerer, und

b) einer wäßrigen Emulsion oder Mikroemulsion eines (Per)fluorpolyethers gemäß der Definition nach irgendeinem der Ansprüche 1 bis 4.

**7.** Zusammensetzung nach Anspruch 6, worin das Polytetrafluorethylen-Polymer in Mengen, berechnet als trockenes PTFE, von etwa 2 bis 60 Gew.-%, insbesondere von etwa 5 bis etwa 20 Gew.-%, bezogen auf das Gesamtgewicht des (Per)fluorpolyethers, vorliegt.

**Revendications**

**1.** Un procédé pour la protection du marbre, des pierres, des tuiles, du ciment, du gypse, du bois et autres matériaux correspondants utilisés en particulier dans l'industrie de la construction, à l'égard de l'action destructrice des agents atmosphériques et agents polluants, par application sur ces matériaux d'un agent protecteur comprenant un mélange de:

(a) une dispersion aqueuse d'un homopolymère de tétrafluoroéthylène et/ou d'un copolymère de tétrafluoroéthylène contenant jusqu'à 12 % en moles d'autres monomères perfluorés; et

(b) une émulsion ou micro-émulsion aqueuse d'un (per)fluoropolyéther comprenant les séquences d'une ou plusieurs unités fluorooxyalkylènes présentant les formules suivantes:

$$(\underset{CF_3}{CF}-CF_2O),\ (CF_2CF_2O),\ (CF_2O),\ (\underset{CF_3}{CFO}),\ (CF_2-\underset{CF_3}{CFO}),$$
$$(CF_2CF_2CF_2O)\ \text{et}\ (CF_2CF_2CH_2O);$$

ayant un poids moléculaire moyen compris entre environ 1000 et environ 10 000 et présentant des groupes terminaux perfluoroalkyles et/ou des groupes terminaux contenant des groupes fonctionnels capables de former des liaisons physiques et/ou chimiques, plus particulièrement des liaisons de coordination ou de transfert de charge avec des matériaux à protéger.

**2.** Le procédé selon la revendication 1, dans lequel le (per)fluoropolyéther contient des groupes fonctionnels sélectionnés parmi -COOH, $-CH_2OH$, polyoxyalkylène-OH, $-C(OH)_2-CF_3$, $-CONR^2R^3$, $-CONHR^9$, $-CONH_2$, $-COOR^4$ et les groupes ammonium quaternaires, dans lesquels les groupes $R^2$ et $R^3$ identiques ou différents l'un de l'autre, représentent des groupes alkyles; $R^4$ représente un groupe alkyle ou un groupe aromatique ou un groupe alkylaromatique, et $R^9$ représente un groupe alkyle.

**3.** Le procédé selon la revendication 2, dans lequel les groupes -COOH sont salifiés.

**4.** Le procédé selon l'une quelconque des revendications 1 à 3, dans lequel on utilise un ou plusieurs (per)fluoropolyéthers présentant les formules générales suivantes:

$$(a)\quad R_fO(\underset{CF_3}{CF}-CF_2O)_n(\underset{CF_3}{CFO})_m(CF_2O)_pR'_f$$

présentant une distribution aléatoire des unités perfluoroalkylènes;

(b) $R_fO(CF_2CF_2O)_n(CF_2O)_mR'_f$

présentant une distribution aléatoire des unités perfluorooxyalkylènes;

$$\text{(c)}\quad R_fO(CF_2CF_2O)_n(CF_2O)_m\left(\begin{array}{c}CFO\\ |\\ CF_3\end{array}\right)_p\left(\begin{array}{c}CF-CF_2O\\ |\quad\quad\\ CF_3\quad\quad\end{array}\right)_o R'_f$$

présentant une distribution aléatoire des unités perfluorooxyalkylènes;

$$\text{(d)}\quad R_fO\left(\begin{array}{c}CF-CF_2O\\ |\quad\quad\\ CF_3\quad\quad\end{array}\right)_n R'_f$$

(e) $R_fO(CF_2CF_2O)_nR'_f$

(f) $R_fO(CF_2CF_2CF_2O)_nR'_f$ ou $R_fO(CF_2CF_2CF_2O)_nR'_f$;

dans lequel m, n, o et p ont des valeurs telles que le poids moléculaire est compris dans l'intervalle indiqué dans la revendication 1 et $R_f$ et $R'_f$ sont des groupes perfluoroalkyles en $C_1$-$C_3$ et/ou des groupes terminaux contenant des groupes fonctionnels du type défini dans les revendications 1 et 2.

**5.** Un procédé selon l'une quelconque des revendications 1 à 4, dans lequel le (per)fluoropolyéther est employé sous forme d'une microémulsion aqueuse.

**6.** La composition pour la protection du marbre, des pierres, des tuiles, du ciment, du gypse, du bois et des matériaux apparentés comprenant un mélange de:
(a) une dispersion aqueuse d'un homopolymère de tétrafluoroéthylène ou d'un copolymère de tétrafluoroéthylène contenant jusqu'à 12 % en moles d'autres monomères perfluorés; et
(b) une émulsion ou microémulsion aqueuse d'un (per)fluoropolyéther telle que définie dans l'une quelconque des revendications 1 à 4.

**7.** La composition selon la revendication 6, dans laquelle le polymère consistant en polytétrafluoroéthylène est présent en une quantité allant de 2 à 60 % en poids, plus particulièrement, d'environ 5 à environ 20 % en poids calculée sous forme de PTFE sec, par rapport au poids total des (per)fluoropolyéthers.